# EUROPÄISCHE PATENTSCHRIFT

(11) **EP 1 973 694 B1**
(45) Veröffentlichungstag und Bekanntmachung des Hinweises auf die Patenterteilung: **08.07.2009**
(21) Anmeldenummer: 06828712.7
(22) Anmeldetag: 20.12.2006
(51) Int. Cl.: B23Q 1/00

(54) **UMSETZEINRICHTUNG MIT WENIGSTENS EINEM FANGSTIFT**
CONVERTER COMPRISING AT LEAST ONE PIN STOP
DISPOSITIF DE TRANSFERT COMPRENANT AU MOINS UN PILOTE CONIQUE

(30) Priorität: 16.01.2006 DE 102006002000
(43) Veröffentlichungstag der Anmeldung: 01.10.2008
(73) Patentinhaber: ROBERT BOSCH GMBH, 70469 Stuttgart (DE)
(72) Erfinder: HINDERER, Karl, 74427 Fichtenberg (DE); SKLJAROW, Paul, 71701 Schwieberdingen (DE)
(74) Vertreter: Maiß, Harald
(86) Internationale Anmeldenummer: PCT/DE2006/002283
(87) Internationale Veröffentlichungsnummer: WO 2007/079708

(56) Entgegenhaltungen:
- DE-A1- 10 222 391
- GB-A- 2 267 665
- US-A- 3 555 963

## Beschreibung

Die vorliegende Erfindung betrifft eine Umsetzeinrichtung, welche zum Umsetzen eines Werkstückträgers von einer ersten Werkstückträger-Position in eine von der ersten verschiedene zweite Werkstückträger-Position ausgebildet ist, mit wenigstens einem sich längs einer Stiftachse erstreckenden Fangstift, welcher verstellbar ist zwischen einer Nichteingriffsstetiung, in welcher er außer Eingriff mit einem Werkstückträger ist; und einer Eingriffsstellung, in welcher er in Eingriff mit einem Werkstückträger ist.

Derartige Umsetzeinrichtungen sind z.B aus dem Dokument US-A-3,555,963 bekannt und können beispielsweise an flexiblen Bearbeitungsstraßen eingesetzt werden. Flexible Bearbeitungsstraßen, an welchen eine Mehrzaht von einzelnen Bearbeitungsplätzen in einer Materialflussrichtung aufeinander folgend angeordnet sein können, sind beispielsweise aus dem Bereich von Kleinteilmontagen bekannt. In diesen Bearbeitungsstraßen werden die zu bearbeitenden Werkstücke in der Regel auf einheitlichen Werkstückträgern transportiert. Einen wesentlichen Beitrag zur Flexibilität der Bearbeitungsstraßen liefern dabei die Umsetzeinrichtungen, welche dazu ausgebildet sind, einen Werkstückträger zwischen zwei verschiedenen Positionen umzusetzen, etwa zwischen zwei Transportstrecken oder zwischen einer Transportstrecke und einem Prozessnest und dgl.

Beim Verstellen des Fangstifts zwischen seiner Nichteingriffsstellung und seiner Eingriffsstellung wird der Fangstift in der Regel längs seiner Stiftachse in Einführrichtung in eine entsprechende Eingriffsausnehmung am Werkstückträger eingeführt. Analog hierzu wird der Fangstift bei seiner Verstellung von seiner Eingriffssteitung in die Nichteingriffsstellung längs seiner Stiftachse in einer der Einführrichtung entgegengesetzten Ausziehrichtung bewegt. Während der Einführ- oder der Ausziehbewegung kann es zu einem unerwünschten Verklemmen zwischen Fangstift und Werkstückträger kommen. Dieses Verklemmen kann dazu führen, dass entweder kein brauchbarer Eingriff zwischen Fangstift und Werkstückträger hergestellt oder ein bestehender Eingriff zwischen diesen nicht vollständig rückgängig gemacht wird. Weiterhin kann es vorkommen, dass der Werkstückträger durch die Klemmkräfte unerwünschterweise in eine nicht vorhersehbare Richtung bewegt wird, so dass unter Umständen ein Werker korrigierend von Hand eingreifen muss, um die Funktionsfähigkeit der Umsetzeinrichtung an der betreffenden Stelle wieder herzustellen.

Es ist daher-Aufgabe der vorliegenden Erfindung, eine gattungsgemäße Umsetzeinrichtung bereitzustellen, bei welcher das Risiko eines Verklemmens zwischen Fangstift und Werkstückträger verglichen mit dem Stand der Technik verringert ist.

Erfingdungsgemäß wird diese Aufgabe durch eine Umsetzeinrichtung der eingangs genannten Art gelöst, bei welcher der Fangstift einen Fangstiftkörper umfasst, an welchem ein erster und ein zweiter radialer Vorsprung ausgebildet ist, wobei der erste Vorsprung eine erste Anlagefläche und der zweite Vorsprung eine zweite Anlagefläche aufweist, welche zur Anlage an Gegenanlageflächen einer Eingriffsausnehmung ausgebildet sind, wobei die erste und die zweite Anlagefläche zumindest abschnittsweise in unterschiedlichen axialen Bereichen und unterschiedlichen Umfangsbereichen des Fangstifts ausgebildet sind.

Durch die erfindungsgemäße Ausbildung des Fangstifts besteht im Eingriffszustand von Werkstückträger und Fangstift ein Spiel zwischen der dem Fangstift zugewandten Wandung einer Eingriffsäusnehmung, in die der Fangstift eingeführt ist, und dem Stiftkörper. Durch dieses Spiel kann das Risiko einer Verklemmung von Werkstückträger und Fangstift verringert werden.

Der Fangstift liegt mit seiner ersten und seiner zweiten Anlagefläche an entsprechenden Gegenanlageflächen der Eingriffsausnehmung des Werkstückträgers an, so dass über diesen Anlageeingriff Kräfte übertragbar sind.

Da die Anlageflächen zumindest abschnittsweise in unterschiedlichen axialen Bereichen und unterschiedlichen Umfangsbereichen des Fangstifts ausgebildet sind, liegt der Fangstift über seine gesamte Einführtiefe an keiner Stelle längs seines gesamten Umfangs an der Eingriffsausnehmung an. Hierdurch besteht Raum für Mikrobewegungen auf Grund von Materiaielastizitäten, die als Ausweichbewegungen wirken. Dadurch können Verklemmungen vermindert oder sogar vollständig reduziert werden.

Grundsätzlich kann der Fangstift eine beliebige Querschnittsform aufweisen, etwa als beliebiges Prisma. Vorzugsweise ist er jedoch zylindrisch zum Eingriff in eine ebenfalls zylindrische Eingriffsausnehmung ausgebildet. In diesem bevorzugten Fall sind die erste und die zweite Anlagefläche als Zylindersegmente ausgebildet. Vorteilhafterweise sind die Anlageflächen dann derart geformt, dass sie sich bezogen auf die Stiftachse in axialer Richtung und in Umfangsrichtung erstrecken und in radiale Richtung weisen.

Eine Fläche soll dabei im Sinne der vorliegenden Anmeldung als in eine bestimmte Richtung weisend gelten, wenn ihr Normalenvoktor eine in diese Richtung weisende komponente besitzt.

Vorzugsweise ist die hier beschriebene Umsetzeinrichtung eine sogenannte Hub-Dreh-Umsetzeinrichtung, welche den Werkstückträger nach Ineingriffnahme anhebt und durch Verschwenken in eine neue Position umsetzt. Vorzugsweise erfolgt das Anheben des Werkstückträgers längs der Stiftachse, da dann das Gewicht des Werkstückträgers von einer eigens dafür ausgebildeten Einrichtung der Umsetzeinrichtung aufgenommen werden kann und der Fangstift mit der ersten und der zweiten Anlagefläche lediglich ein Kippmoment des Werkstückträgers um eine axial zwischen der ersten und der zweiten Anlagefläche orthogonal zur Stiftachse verlaufende Kippachse abstützen muss. Dieses kann besonders einfach dann erfolgen, wenn die erste und die zweite Anlagefläche auf entgegengesetzten Seiten der Stiftachse ausgebildet sind.

Ein Verklemmen zwischen Werkstückträger und Fangstift kann besonders sicher dann vermieden werden, wenn die erste und die zweite Anlagefläche in axialer Richtung oder/und in Umfangsrichtung mit Abstand voneinander ausgebildet sind, da sich die erste und die zweite Anlagefläche dann in axialer Richtung oder/und im Umfangsrichtung nicht überlappen.

Ebenfalls ist es zur Vermeidung oder wenigstens Reduzierung eines Verklemmungsrisikos vorteilhaft, wenn sich die erste und die zweite Anlagefläche in Umfangsrichtung über einen möglichst geringen Winkelbereich erstrecken. Vorteilhafterweise sollten sich die erste und die zweite Anlagefläche über weniger als 180°, besonders bevorzugt über weniger als 120° erstrecken, da dann wiederum ein möglichst großer Freiraum zwischen Fangstiftkörper und Eingriffsausnehmung verbleibt, der zur Ausweichbewegung des Fangstifts genutzt werden kann.

Zur Erleichterung der Einführbewegung des Fangstifts in die Eingriffsausnehmung des Werkstückträgers kann vorgesehen sein, dass zumindest zwischen dem einführseitigen Axialende der ersten oder/und der zweiten Anlagefläche und dem Fangstiftkörper eine in Einführrichtung verlaufende Einführrampe vorgesehen ist. Vorzugsweise sind derartige Einführrampen sowohl für die erste als auch für die zweite Anlagefläche vorgesehen. Zur weiteren Erleichterung des Einführens des Fangstifts in die Eingriffsausnehmung kann der Übergang zwischen Anlagefläche und Einführrampe verrundet ausgebildet sein.

Zur weiteren Vereinfachung der Einführbewegung des Fangstifts in die Eingriffsausnehmung des Werkstückträgers kann vorgesehen sein, dass der Fangstift an seinem einführseitigen Längsende mit einer Einführschräge, insbesondere einem Einführkonusabschnitt, ausgebildet ist

Ein besonders einfaches Einführen des Fangstifts in die Eingriffsausnehmung des Werkstückträgers bei kostengünstiger Herstellung des Fangstifts kann dann erfolgen, wenn die Einführschräge des Fangstifts und die Einführrampe der dem einführseitigen Längsende des Fangstifts näher liegenden Anlagefläche zumindest abschnittsweise als eine in Einführrichtung stufenlos zusammenhängende Fläche ausgebildet sind.

Weiterhin kann ein Verklemmen, wie oben bereits angedeutet, auch bei der A$usziehbewegung entstehen. Zur Vermeidung oder Reduzierung dieses Verklemmungsrisikos kann der Fangstift derart ausgebildet sein, das zwischen der dem einführseitigen Längsende des Fangstifts näher liegenden Anlagefläche und dem Fangstift, vorzugsweise zwischen beiden Anlageflächen und dem Fangstift, eine in Ausziehrichtung verlaufende Ausziehrampe ausgebildet ist. Dabei ist eine Ausziehrampe an der dem einführseitigen Längsende ferner liegenden Anlagefläche häufig entbehrlich, wenn diese Anlagefläche am axialen Ende der Einführstrecke des Fangstifts angeordnet ist, so dass das in Einführrichtung nachlaufende axiale Ende dieser Anlagefläche nicht oder verglichen mit der gesamten Einführtiefe nur geringfügig in die Eingriffsausnehmung des Werkstückträgers eintaucht. Auch hier kann zur Erleichterung der Ausziehbewegung der Übergang zwischen Anlagefläche und Ausziehrampe verrundet ausgebildet sein.

Ebenso kann zur Vermeidung einer Verklemmung durch eine möglicherweise auftretende Verdrehung des Werkstückträgers am Fangstift um die Stiftachse vorgesehen sein, dass zwischen wenigstens einem Umfangsende der ersten oder/und der zweiten Anlagefläche und dem Fangsüftkörper eine in Umfangsrichtung verlaufende Rampe vorgesehen ist. Diese kann im Falle zylindrischer Fangstiftkörper einfach als Tangetialfläche vom Umfangsende aus an die Zylindermantelfläche des Fangstiftkörpers ausgebildet sein.

Der Fangstift kann im Falle eines Schadens oder einer Umrüstung auf sehr einfache Weise gegen einen neuen bzw. anderen Fangstift ausgetauscht werden, wenn er an seinem dem einführseitigen Längsende axial entgegengesetzten Längsende eine Einsteckgeometrie zum Einstecken in eine Einsteckgegengeometrie einer Fangstiftaufnahme der Umsetzeinrichtung aufweist.

Bevorzugt erstreckt sich die Einsteckgeometrie längs einer Einsteckachse, so dass der Fangstift einfach aus einer Fangstiftaufnahme herausgezogen und in diese eingesteckt werden kann. Zur Abstützung der oben erläuterten Kippmomente an der Umsetzeinrichtung ist es vorteilhaft, wenn die Einsteckachse mit der Stiftachse kollinear oder wenigstens zu dieser parallel ist. Im bevorzugten Falle einer Parallelität von Einsteckachse und Stiftachse ist die Einsteckachse vorzugsweise zu einem Umfangsabschnitt des Fangstifts hin versetzt, an dem keine Anlagefläche vorgesehen ist, so dass das Einsteckende des Fangstifts mit der exzentrisch angeordneten Einsteckgeometrie in entsprechende Ausnehmungen mit parallelen Ausnehmungsachsen eingesteckt werden kann. Dadurch kann der Fangstift gegen eine Verdrehung um seine Fangstiftachse mit sehr einfachen Mitteln formschtüssig gesichert werden. Außerdem kann so ein möglichst großer Abstand zwischen zwei Fangstiften einer Vorrichtung erzielt werden.

Gemäß einer Weiterbildung der vorliegenden Erfindung kann die Einsteckgeometrie eine Sicherungsgeometrie umfassen, wie etwa einen Zapfen oder eine Ausnehmung für einen Bajonettverschluss im Zusammenwirken mit der Einsteckgeometrie oder ein Gewinde. Der Fangstift kann grundsätzlich an seinem einführseitigen Längsende mit einer Werkzeugangriffsgeometrie, etwa einem Längsschlitz oder einem Kreuzschlitz oder dgl., ausgebildet sein, um den Fangstift mit Hilfe eines Werkzeugs an der Umsetzeinrichtung zu befestigen.

Um die Rüstzeiten beim Wechsel eines Fangstifts an der Umsetzeinrichtung zu verkürzen, kann die Einsteckgeometrie an ihrem dem einführseitigen Längsende entgegengesetzten einsteckseitigen Längsende mit einer Einfühmeigung, vorzugsweise in Form eines Konusabschnittes, ausgebildet sein. Dann kann die Einsteckgeometrie leichter und schneller in die Einsteckgegengeometrie eingefädelt werden.

Zur sicheren Fixierung eines Werkstückträgers umfasst die Umsetzeinrichtung vorzugsweise eine Mehrzahl.von Fangstiften. Dabei können wenigstens zwei Fangstifte zu einer gemeinsam verstellbaren Fangstiftanordnung zusammengefasst sein. Um Überholvorgänge an Transportstrecken der Bearbeitungsstraße zu gestatten, ist es weiterhin vorteilhaft, wenn die Fangstifte oder Fangstiftanordnungen in ein und derselben Umsetzeinrichtung unabhängig voneinander zwischen ihrer Nichteingriffsstellung und ihrer Eingriffsstellung verstellbar sind.

Die vorliegende Erfindung wird im Folgenden anhand der beiliegenden Zeichnungen näher erläutert. Es stellt dar:
- Fig. 1: zeigt einen Bearbeitungsplatz einer Bearbeitungsstraße, an welcher eine erfindungsgemäße Ausführungsform eines Werkstückträgers zum Einsatz kommt,
- Fig. 2: zeigt einen Moduleinschub mit Transportvorrichtungen und Prozessnest des Bearbeitungsplatzes aus Fig. 1,
- Fig. 3: zeigt eine perspektivische Explosionsansicht einer Baugruppe aus Transportvorrichtung, Werkstückträger-Umsetzeinrichtungen und Prozessnest des Moduleinschubs von Fig. 2,
- Fig. 4: zeigt eine Draufsicht auf die Baugruppe von Fig. 3,
- Fig. 5: zeigt eine perspektivische Ansicht einer Umsetzeinrichtung, welche mit einer erfindungsgemäßen Ausführungsform eines Werkstückträgers in Eingriff ist,
- Fig. 6: zeigt eine Vorderansicht der Umsetzeinrichtung mit Werkstückträger von Fig. 5,
- Fig. 7: zeigt eine perspektivische Darstellung einer Ausführungsform eines erfindungsgemäßen Fangstifts,
- Fig. 8: zeigt eine Ansicht des Fangstifts von Fig. 7 längs der Einsteckachse und Stiftachse von dessen Einsteckende her, und
- Fig. 9: zeigt den Fangstift der Figuren 7 und 8 während einer Einführbewegung in einen Werkstückträger.

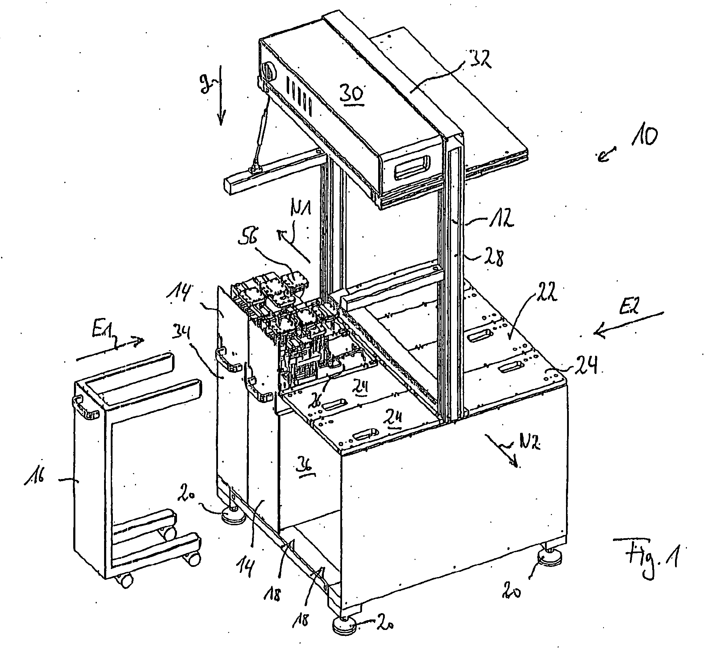

In Fig. 1 ist eine erfindungsgemäße Ansicht eines allgemein mit 10 bezeichneten Bearbeitungsplatzes gezeigt.

Der Bearbeitungsplatz 10, welcher Bestandteil einer nicht dargestellten Bearbeitungsstraße sein kann, dient zur Bearbeitung und Handhabung von Werkstücken, beispielsweise zur Montage von Kleingeräten, wie etwa Bohrmaschinengetrieben und ähnlichem. Der Bearbeitungsplatz 10 umfasst ein Gerüst 12, welches als eine Modulplattform dient, in die Moduleinschübe 14 längs einer ersten Einführrichtung E1 einschiebbar sind. Hierzu wird ein Moduleinschub 14 mit einem Hilfswagen 16 vor die gewünschte Modulaufnahme 18 gestellt und dann längs der ersten Einführrichtung E1 in die Modulplattform 12 eingeschoben.

Die Modulplattform 12 ist derart aufgebaut, dass vier Moduleinschübe 14 nebeneinander längs der ersten Einführrichtung E1 in die Modulplattform einschiebbar sind und dass vier weitere Moduleinschübe auf der gegenüberliegenden Seite der Modulplattform 12 längs einer zweiten Einführrichtung E2 in die Modulplattform einschiebbar sind. Die Einführrichtungen E1 und E2 sind einander entgegengesetzt.

Die Modulplattform 12 ruht auf höhenverstellbaren Füßen 20, so dass eine Grundfläche 22 der Modulplattform bezüglich der Schwerkraftwirkungsrichtung g ausgerichtet werden kann, vorzugsweise derart, dass die Grundfläche 22 "im Wasser" ist.

Die Grundfläche 22 ist gebildet aus insgesamt acht ebenen Grundplatten 24, welche alle eine gemeinsame Auflageebene bilden. Jede Grundplatte 24 ist dabei einer Modulaufnahme 18 zugeordnet.

Die Moduleinschübe 14 umfassen Modul-Grundplatten 26; welche dann, wenn der Moduleinschub 14 in die Modulplattform 12 eingeschoben ist, im Wesentlichen flächig auf der Grundplatte 24 aufliegen.

Die Modulplattform 12 weist an einem die Grundfläche 22 übertragenden Obergestell 28 einen Schaltkasten 30 auf, welcher eine Steuer/Regeleinrichtung umfasst, die mit den Moduleinschüben 14 kommuniziert, wenn diese in die Modulplattform 12 eingeschoben sind. Darüber hinaus ist ein über die Breite der Modulplattform 12 reichender Kabelkanal 32 vorgesehen, in welchem Versorgungs- und Datenübertragungsleitungen für eine Bearbeitungsstraße angeordnet werden können.

In Richtung der Pfeile N1 und N2 neben dem Bearbeitungsplatz 10 können weitere gleichartige oder ähnliche Bearbeitungsplätze zur Bildung einer Bearbeitungsstraße vorgesehen sein.

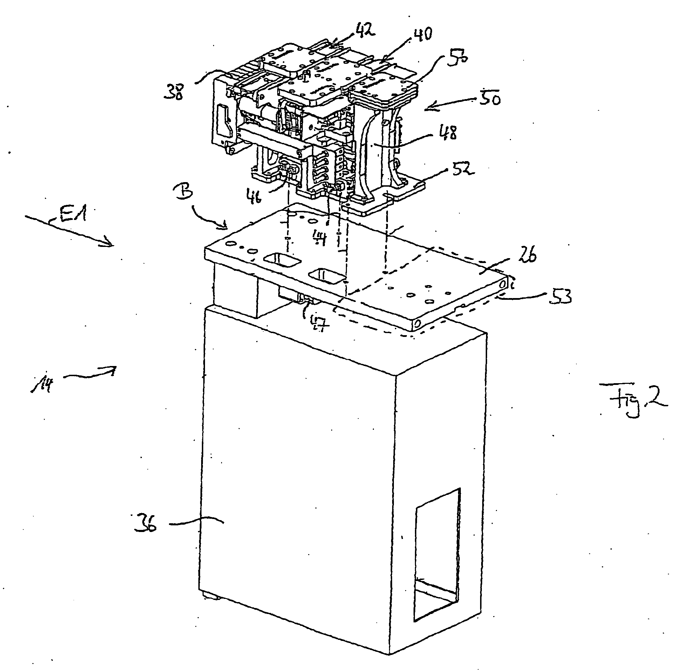

In Fig. 2 ist eine perspektivische Explosionszeichnung des Moduleinschubs 14 dargestellt, wobei die bedienerseitige Platte 34 (s. Fig. 1) der Übersichtlichkeit halber weggelassen ist.

Der Moduleinschub 14 umfasst ein Steuergehäuse 36, in welches Steuer/Regeteinheiten aufgenommen werden können, weiche zur Steuerung von nicht dargestellten Bearbeitungs- oder/und Handhabungsgeräten ausgebildet sein können, die auf der Modul-Grundplatte 26 angeordnet sein können. Die in dem Steuergehäuse 36 vorgesehenen Steuer/Regeleinheiten können auch zur Ansteuerung von einer an dem Moduleinschub 14 vorgesehenen Ventilinsel 38, einer ersten Transportstrecke 40, einer zweiten Transportstrecke 42 sowie zur Steuerung einer Prozess-Umsetzeinrichtung 44 und einer Transportstrecken-Umsetzeinrichtung 46 ausgebildet sein. Die Steuer/Regeleinheiten können mit dem Schaltkasten 30 und der darin vorgesehenen Steuer/Regeleinrichtung über einen Hybridstecker 47 verbunden sein, welcher dann, wenn der Moduleinschub 14 in die Modulplattform 12 eingeschoben ist, in eine an der Modulplattform 12 vorgesehene, nicht dargestellte Hybridsteckbuchse eingeschoben ist. Die Ventilinsel 38, die Transportstrecken 40, 42 und die Umsetzeinrichtungen 44, 46 können alternativ über einen Etektro-Stecker ohne Zwischenanordnung einer Steuer/Regeleinheit im Steuergehäuse 36 auch unmittelbar mit der Steuer/Regeleinrichtung im Schaltkasten 30 verbunden sein.

Der Hybridstecker 47 umfasst einen Etektro-Stecker für Stromversorgungs- und Datenübertragungsleitungen und einen Pneumatik-Stecker, welcher beim Einschieben des Moduleinschubs 14 in die Modulplattform 12 eine Steckverbindung mit einer in der Hybridsteckbuchse vorgesehenen Pneumatik-Steckbuchse bildet, um Druckluft bis zur Ventilinsel 38 zu übertragen. Dort kann die Druckluft je nach Ansteuerung der in der Ventilinsel 38 angeordneten Pneumätik-Schaltventile selektiv weitergeleitet werden.

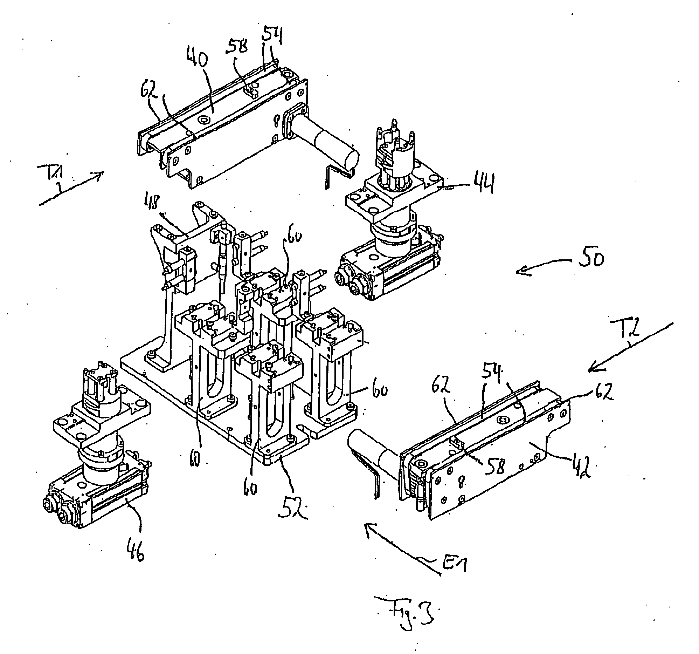

Die Ventilinsel 38, die Transportstrecken 40 und 42, die Umsetzer 44 und 46 (s. auch Fig. 3) sowie ein Prozessnest 48 sind als vormontierte Baugruppe 50 auf die Modul-Grundplatte 26 montiert. Die vormontierte Baugruppe 50 umfasst hierzu eine gemeinsame Baugruppen-Grundplatte 52, welche die Komponenten der vormontierten Baugruppe 50 trägt.

Die vormontierte Baugruppe 50 ist dabei derart auf die Modul-Grundplatte 26 montiert, dass die Ventilinsel 38 näher an der Bedienerseite, B des Moduleinschubs 14 gelegen ist. Dadurch kann vermieden werden, dass evtl. ölhaltige Abluft aus den Pneumatik-Schaltventilen der Ventilinsel 38 zu bearbeitung- oder/und Handhabungsgeräten gelangt, die in Einführrichtung E1 hinter dem Prozessnest 48 anordenbar sind. Zu deren Unordnung ist auf der Modul-Grundplatte 26 ein strichliniert angedeuteter Prozessbereich 53 reserviert. Zur Erleichterung der Anordnung von entsprechenden Bearbeitungs- oder/und Handhabungsgeräten können Bohrungen oder/und Löcher oder/und Nuten in der Modul-Grundplatte 26 vorgesehen sein.

In Fig. 3 ist die vormontierte Baugruppe 50 in einer Explosionsansicht gezeigt. Die Ventilinsel 38 ist in der Ansicht der Fig. 3 weggelassen.

Die erste Transportstrecke 40 und die zweite Transportstrecke 42 sind im Wesentlichen identisch aufgebaut und sind aus einer Doppelgurtfördereinrichtung gebildet Hierzu umfasst die auch stellvertretend für die erste Transportstrecke 40 beschriebene zweite Transportstrecke 42 zwei mit Abstand voneinander verlaufende parallel angeordnete Gurtförderbänder 54. Die zweite Transportstrecke 42 ist dazu vorgesehen, Werkstückträger 56 (s. Fig. 1 oder 2) längs einer zweiten Transportrichtung T2 zu bewegen. Dementsprechend ist die erste Transportstrecke 40 dazu ausgebildet, Werkstückträger in die entgegengesetzte erste Transportrichtung T1 zu fördern.

Die zweite Transportstrecke 42 umfasst ebenso wie die erste Transportstrecke 40 einen selektiv zwischen einer Haltestellung und einer Durchlassstellung verstellbaren Anschlug 58, welcher im ausgefahrenen Zustand als Anschlag für auf den Transportstrecken 40 und 42 beförderte Werkstückträger dient und im eingefahrenen Zustand von diesen Werkstückträgern überfahren wird.

Wie das Prozessnest 48 sind verschiedene Einzelträger 60 auf die Baugruppen-Grundplatte 52 aufgeschraubt. Die Träger 60 dienen zur Aufnahme der Transportstrecken 40 und 42 und der Umsetzer 44 und 46. Gemäß einer nicht dargestellten vorteilhaften Weiterbildung der vorliegenden Erfindung können die vier Einzelträger 60 auch zu einer integralen Trägeranordnung zusammengefasst sein.

Durch die in Fig. 3 gezeigte Anordnung können die Transportstrecken 40 und 42, die Umsetzer 44 und 46 sowie das Prozessnest 48 ideal zueinander ausgerichtet werden, bevor der die Baugruppe 50 aufnehmende Moduteinschub 14 in eine Modulplattform 12 eingeschoben wird.

Der in Fig. 3 gezeigte Umsetzer 46 ist ein Transportstrecken-Umsetzer, welcher dazu ausgebildet ist, Werkstückträger 56 von der ersten Transportstrecke 40 zur zweiten Transportstrecke 42 umzusetzen und umgekehrt. Hierzu hebt der Umsetzer 46 den Werkstückträger auf einer Transportstrecke an, bis der Werkstückträger außer Eingriff mit den Führungsleisten 62 der Transportstrecken 40 und 42 gelangt. Dann verschwenkt der Umsetzer 46 den Werkstückträger 56 um 180° und setzt ihn zwischen den Führungsleisten 62 der jeweils anderen Transportstrecke ab. Daraus folgt, dass die Transportstrecken 40 und 42 in einem von der Größe des Werkstückträgers 56 bestimmten Abstand voneinander angeordnet ist, wobei die Drehachse des Umsetzers 46 in der Mitte mit gleichem Abstand von den Transportstrecken 40 und 42 angeordnet ist.

Der Umsetzer 44 ist dagegen ein Prozess-Umsetzer, welcher dazu ausgebildet ist, Werkstückträger von der ersten Transportstrecke 40 zum Prozessnest 48 umzusetzen und umgekehrt. Hierdurch kann ein Werkstückträger von der Transportstrecke entnommen und unabhängig von Transportvorgängen auf der ersten Transportstrecke am Prozessnest 48 durch Bearbeitungs- oder/und Handhabungsgeräte bearbeitet werden.

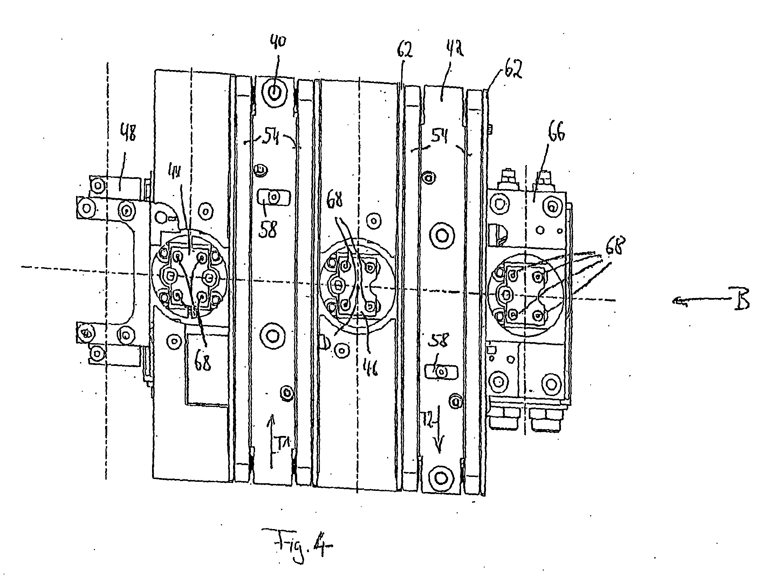

In. Fig. 4 ist eine Draufsicht auf die erste und die zweite Transportvorrichtung 40, 42, die Prozess-Umsetzeinrichtung 44, die Transportstrecken-Umsetzeinrichtung 46 und das Prozessnest 48 dargestellt. Weiterhin ist eine dritte Umsetzeinrichtung 66 dargestellt, welche einen nicht dargestellten Werkstückträger von der zweiten Transportstrecke 42 zu der von dem Prozessnest 48 wegweisenden Seite, d.h. zur Bedienerseite B hin, verschwenken kann. Jede der Umsetzeinrichtungen 44, 46, 66 weist insgesamt vier Fangstifte 68 auf, welche zum umsetzen eines Werkstückträgers in diesen eingreifen. Die Fangstifte 68 sind im Wesentlichen gleichartig und sind nur unterschiedlich orientiert an den jeweiligen Umsetzeinrichtungen angeordnet.

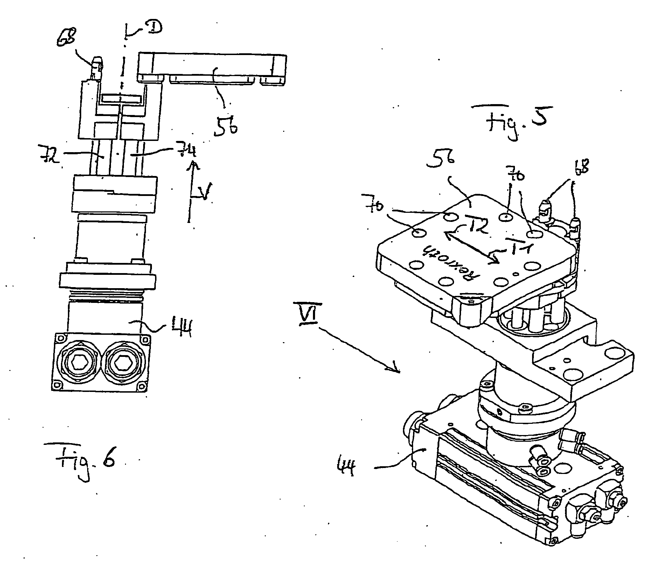

Zum Umsetzen eines Werkstückträgers greifen jeweils nur zwei von vier Fangstiften 68 einer Umsetzeinrichtung in entsprechende Ausnehmungen 70 (s. auch Fig. 5) des Werkstückträgers 56 ein. Dabei bilden stets in Transportrichtung T1 und T2 mit Abstand voneinander angeordnete Fangstifte 68 derartige Eingriffspaare. Die Drehachse der Transportstrecken-Umsetzeinrichtung 46 ist in Fig. 4 mit D bezeichnet. Sie ist orthogonal zur Zeichenebene der Fig. 4. Die Drehachse D hat den gleichen Abstand zur ersten Transportstrecke 40 wie zur zweiten Transportstrecke 42. Ein von den Transportstrecken 40 und 42 bewegter Werkstückträger muss zumindest so breit sein, dass die der jeweiligen Transportstrecke, auf welcher der Werkstückträger bewegt wird, näher liegenden Fangstiftepaare der Fangstifte 68 in diesen eingreifen können. Damit wahlweise der Werkstückträger 56 sowohl von der Transportstrecken-Umsetzeinrichtung 46 wie auch von der Prozess-Umsetzeinrichtung 44 oder der dritten Umsetzeinrichtung 46 erfasst werden kann (je nachdem, auf welcher Transportstrecke er sich befindet), ragt der Werkstückträger vorzugsweise zu beiden Seiten der Transportstrecken 40 und 42 ein entsprechendes Maß über die Transportstrecken hinaus.

So, wie sich die Transportstrecken-Umsetzeinrichtung 46 in der Mitte zwischen der ersten und der zweiten Transportstrecke 40 bzw. 42 befindet, ist die Prozess-Umsetzeinrichtung 44 in der Mitte des Abstands angeordnet, welchen das Prozessnest 48 von der ersten Transportstrecke 40 hat.

Damit es auf die Orientierung eines Werkstückträgers 56 auf den Transportstrecken 40, 42 nicht ankommt, werden vorzugsweise im Wesentlichen symmetrische Werkstückträger 56 mit quadratischer Grundfläche verwendet, welche auf jeder Seite Ausnehmungen 70 zum Eingriff der Fangstifte 68 aufweisen.

Es wird darauf hingewiesen, dass die Drehachsen D aller Umsetzeinrichtungen 44, 46 und 66 in Fig. 4 mit gleichem Abstand zur jeweils nächstliegenden zugeordneten Transportstrecke angeordnet sind.

In Fig. 5 ist die Prozess-Umsetreinrichtung 44 in der Perspektive dargestellt. Die Prozess-Umsetzeinrichtung 44 in Fig. 5 befindet sich im Eingriff mit dem Werkstückträger 56 mit im Wesentlichen quadratischer Grundfläche. Zu erkennen sind die Ausnehmungen 70 zum Eingriff mit den Fangstiften 68 der Prozess-Umsetzeinrichtung 44.

In Fig. 6 ist eine Vorderansicht längs des Pfells VI aus Fig. 5 der Prozess-Umsetzeinrichtung 44 dargestellt.

Bei den im dargestellten Beispiel verwendeten Umsetzeinrichtungen 44, 46 und 66 handelt es sich um sogenannte Hub-Dreh-Einheiten, welche nach Ineingriffnahme eines Werkstückträgers 56 diesen in Richtung des Pfeils V längs ihrer Drehachse D anheben und um 180° um diese Drehachse D verschwenken. Zum Anheben von Werkstückträgern 56 weist die Prozess-Umsetzeinrichtung 44 zwei gesondert voneinander betätigbare Hubsysteme 72 und 74 auf, wodurch sichergestellt ist, dass ein im Prozessnest 48 aufgenommener Werkstückträger von einer der Hubeinrichtungen 72 oder 74 ergriffen und angehoben werden kann, ohne dass die jeweils andere Hubeinrichtung mit angehoben wird und somit in den Bewegungsweg eines längs der ersten Transportstrecke 40 bewegten Werkstückträgers ragt. Hierdurch wird sichergestellt, dass die Transportfunktion der Transportstrecke 40 erhalten bleibt, unabhängig davon, ob sich im Prozessnest 48 ein Werkstückträger befindet oder nicht. Hierdurch können Werkstückträger aus der Transportstrecke 40 einen im Prozessnest 48 aufgenommenen Werkstückträger passieren.

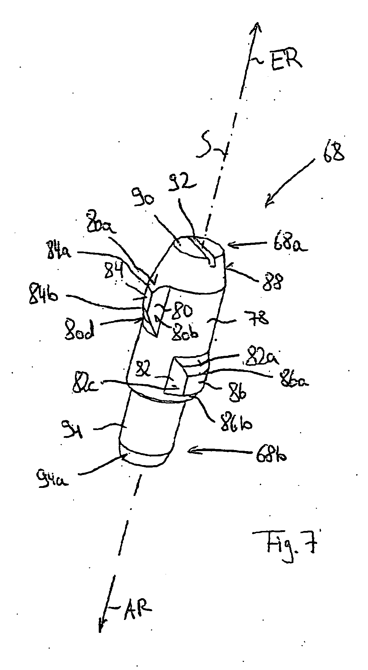

In Fig. 7 ist eine Ausführungsform eines Fangstifts 68 dargestellt.. Der Fangstift 68 erstreckt sich längs seiner Stiftachse S, die gleichzeltig die Einführrichtung ER des Fangstifts 68 in eine Eingriffsausnehmung 70 des Werkstückträgers 56 definiert.

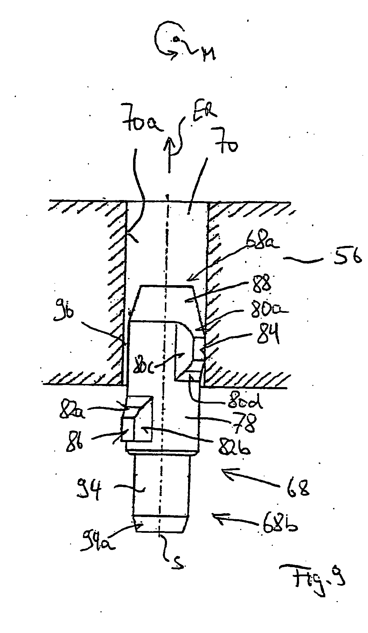

Der Fangstift 68 weist einen im Wesentlichen zylindrischen Fangstiftkörper 78 und zwei von diesem radial abstehende Vorsprünge 80 und 82 auf. An den Vorsprüngen 80 und 82 sind zur Zylindermantelfiäche des Fangstiftkörpers 78 konzentrische Anlageflächen 84 und 86 als Zylindersegmentflächen mit der Stiftachse S als Mittelachse ausgebildet. Diese Anlagefläche 84 und 86 sind zur Anlage an Gegenanlageflächen 70a der Eingriffsausnehmungen 70 von Werkstückträgern 56 ausgebildet (s. Fig. 9).

An seinem einführseitigen Längsende 68a weist der Fangstift 68 eine konusartige Einführschräge 88 auf, welche das Einführen des Fangstifts 68 in die Eingriffsausnehmung 70 der Werkstückträger 56 erleichtert. An der Stirnseite 90 am einführseitigen Längsende 68a des Fangstifts 68 ist ein Schlitz 92 zum Eingriff eines Schraubendrehers vorgesehen. Hier kann beispielsweise ein nicht dargestellter Schraubendreher eingreifen, um den Fangstift 68 in eine Umsetzeinrichtung einzudrehen.

Die Vorsprünge 80 und 82 weisen in Einführrichtung ER weisende Einführrampen 80a und 82a auf, wobei die Einführrampe 80a des näher am einführseitigen Längsende 68a gelegenen Vorsprungs 80 stufenlos in die Einführschräge 88 des Fangstifts 68 übergeht. Die beschriebenen Einführrampen erleichtern das Einführen der Anlageflächen 84 und 86 in die entsprechende Eingriffsausnehmung 70 am Werkstückträger 56.

Die Einführrampe 80a bildet mit dem einführseitigen Axialende 84a der Anlagefläche 84 eine abgerundete Stufe. Ebenso bildet die Einführrampe 82a mit dem einführseitigen Axialende der Anlagefläche 86 eine abgerundete Stufe.

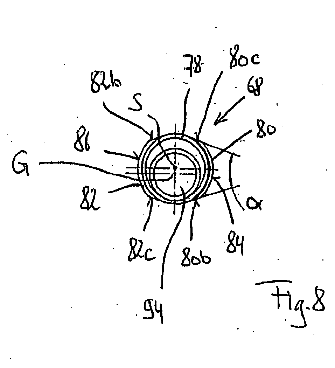

Weiterhin sind Tangentialflächen vorgesehen, welche von den Umfangsenden der jeweiligen Anlageflächen 84 und 86 aus sich tangential zu dem zylindrischen Fangstiftkörper 78 hin erstrecken. In Fig. 7 sind dabei die Tangentialflächen 80c und 82b an den Vorsprüngen 80 und 82 zu erkennen. In Fig. 8 sind alle ebenfalls Rampen bildenden Tangentialflächen 80b, 80c, 82b, 82c zu erkennen.

Der Vorsprung 80 weist auch eine in einer der Einführrichtung ER entgegengesetzten Ausziehrichtung AR weisende Ausziehrampe 80d auf. Die Ausziehrampe 80d verläuft zwischen dem dem Einsteckende 68b des Fangstifts 68 näher liegenden Axialende 84b der Anlagefläche 84 und der zylindrischen Mantelfläche des Fangstiftkörpers 68.

An der dem Einsteckende 68b näher liegenden Anlagefläche 86 ist keine derartige Ausziehrampe vorgesehen, da das dem Einsteckende 68b näher liegende Axialende 86b der Anlagefläche 86 im Vergleich zur gesamten Eindringtiefe des Fangstifts 68 in die Eingriffsausnehmung 70 nur eine geringfügige Strecke bzw. gar nicht in die Eingriffsausnehmung 70 des Werkstückträgers 56 eintaucht. Bereits zu Beginn der Ausziehbewegung des Fangstifts 68 aus der Eingriffsausnehmung 70 gelangt daher das dem einsteckseitigen Längsende 68b des Fangstifts 68 näher liegende Axialende 84b außer Eingriff mit der Eingriffsausnehmung 70, so dass hier eine das Ausziehen der betreffenden Anlagefläche 84 erleichternde Ausziehrampe entbehrlich ist.

Die Übergänge zwischen den Anlageflächen 84 und 86 und den sich daran anschließenden Rampen 80a, 80b, 80c, 80d bzw. 82a, 82b, 82c, 82d sind zur Vermeidung von unerwünschten Verklemmungen abgerundet ausgebildet.

In Fig. 8 ist zu erkennen, dass die Tangentialflächen 80b und 80c des dem einführseitigen Längsende 68a näher liegenden Radialvorsprungs 80 einen Winkel α einschließen. Ebenso schließen die Tangentialflächen 82b und 82c des dem Einsteckende 68b des Fängstifts 68 näher liegenden Radialvorsprungs 82 einen Winkel ein. Vorzugsweise sind die beiden Winkel gleich. Der Winkel α liegt zur Vermeidung zu hoher Flächenpressungen vorzugsweise zwischen 30° und 45°, besonders bevorzugt zwischen 35° und 40°, höchst vorteilhaft zwischen 35° und 36°.

Wie aus einer Zusammenschau der Figuren 7 und 8 hervorgeht, liegen die Anlageflächen 84 und 86 bezüglich der Fangstiftachse S auf unterschiedlichen Seiten und erstrecken sich weder in axialer Richtung noch in Umfangsrichtung so weit, dass sie gemeinsame Axial- oder Umfangsbereiche des Fangstifts 68 belegen, d.h. die Anlageflächen 84 und 86 überlappen sich weder bei Betrachtung einer Axialprojektion (längs der Fangstiftachse S) in Umfangsrichtung, noch überlappen sie sich bei Betrachtung einer Radialprojektion in axiater Richtung. Dies soll jedoch nicht ausschließen, dass sich die Einführrampe 82a und die Ausziehrampe 80d bei Betrachtung einer Radialprojektion in axialer Richtung überlappen können.

Der hier dargestellte Fangstift 68 hat den Vorteil, dass er lediglich mit den zwei Anlageflächen 84 und 86 an der Innenrand 70a einer Eingnffsausnehmung 70 anliegt. Dies bedeutet, lediglich bei Betrachtung der o.g. Axialprojektion weisen die Anlageflächen 84 und 86 einen dem Durchmesser der Eingriffsausnehmung 70 entsprechenden Abstand voneinander auf. Jeder Querschnitt des Fangstifts 68 weist im Wesentlichen über die gesamte Einführtiefe jedoch eine geringere Querschnittsfläche und einen geringeren Durchmesser auf als die im Wesentlichen zylindrische Eingriffsausnehmung 70 des Werkstückträgers 56. Dadurch kann der Fangstift 68 zumindest geringfügige Ausweichbewegungen in der Eingriffsausnehmung 70 ausführen, wodurch ein Verklemmen während der Einführ- oder Ausziehbewegung vermieden wird.

Durch die unterschiedliche Lage der Ablageflächen 84 und 86 in axialer Richtung bzw. in Umfangsrichtung bezogen auf die Fangstiftachse S können an diesen Anlageflächen Kippmomente des am Fangstift 68 gehaltenen Werkstückträgers 56 abgestützt werden.

An seinem einsteckseitigen Längsende 68b weist der Fangstift 68 einen Zapfen 94 auf, welcher ebenfalls mit einer konusartigen Einführschräge 94a versehen ist. In dem hier gezeigten Beispiel weist der Zapfen 94 einen geringeren Durchmesser auf als der Fangstiftkörper 78. Der Zapfen 94, welcher sich längs einer zur Fangstiftachse S parallelen Zapfenachse G (s. Fig. 8) erstreckt, ist bezogen auf die Fangstiftachse S mit einem radialen Versatz angeordnet. Die Versatzrichtung ist dabei orthogonal zu einer von der Fangstiftachse S und den Normalenvektoren der Anlageflächen 84 und 86 aufgespannten Ebene. Der Fangstift 68 wird dabei mit seinem einsteckseitigen Längsende 68b und mit einem dem Zapfen 94 nahen Abschnitt des Fangstiftkörpers 78 in eine entsprechende Stufenbohrung (nicht dargestellt) eingesteckt und somit formschlüssig gegen eine Verdrehung um die Fangstiftachse S gesichert.

Der Zapfen 94 kann alternativ mit einem Radialvorsprung, beispielsweise zur Realisierung einer Bajonettverriegelung, ausgebildet sein. Anstatt eines radialen Vorsprungs kann er zur Realisierung der Bajonettverriegelung auch mit einer entsprechenden L-förmigen Ausnehmung versehen sein.

In Fig. 9 ist eine Einführbewegung des Fangstifts 68 in eine zylindrische Eingriffsausnehmung 70 eines Werkstückträgers 56 dargestellt. In Fig. 9 erkennt man, dass der Fangstift 68 lediglich mit den Anlageflächen 84 und 86 an der zylindrischen Innenwandung als Gegenanlagefläche 70a der Eingriffsausnehmung 70 des Werkstückträgers 56 anliegt. Längs der übrigen Einführstrecke verbleibt ein Spaltraum 96 zwischen der Innenwand der Eingriffsausnehmung 70 und dem Fangstiftkörper 78. Die Lage der Anlageflächen 84 und 86 in dem in Fig. 9 gezeigten Beispiel gestattet die Abstützung eines Kippmoments M, wie es in Fig. 9 gezeigt ist. Der Momentenvektor des Kippmoments M ist dabei orthogonal zur Zeichenebene der Fig. 9.

Jede der oben beschriebenen Anlageflächen kann auch mehrteilig, d.h. mit wenigstens zwei gesondert voneinander ausgebildeten Teilanlageflächen, ausgebildet sein.

## Patentansprüche

1. Umsetzeinrichtung, welche zum Umsetzen eines Werkstückträgers (56) von einer ersten Werkstückträger-Position in eine von der ersten verschiedene zweite Werkstückträger-Position ausgebildet ist, mit wenigstens einem sich längs einer Stiftachse (S) erstreckenden Fangstift (68), welcher verstellbar ist zwischen einer Nichteingriffsstellung, in welcher er außer Eingriff mit einem Werkstückträger (56) ist, und einer Eingriffsstellung, in welcher er in Eingriff mit einem Werkstückträger (56) ist,
**dadurch gekennzeichnet, dass** der Fangstift (66) einen Fangstiftkörper (78) umfasst, an welchem ein erster (80) und ein zweiter radialer Vorsprung (82) ausgebildet ist, wobei der erste Vorsprung (80) eine erste Anlagefläche (64) und der zweite Vorsprung (82) eine zweite Anlagefläche (86) aufweist, welche zur Anlage an Gegenanlageflächen (70a) einer im Wesentlichen zylindrische Eingriffsausnehmung (70) eines Werkstückträgers (56) ausgebildet sind, wobei die erste (84) und die zweite Anlagefläche (86) zumindest abschnittsweise in unterschiedlichen axialen Bereichen und unterschiedlichen Umfangsbereichen des Fangstifts (68) ausgebildet sind.

2. Umsetzeinrichtung mit Fangstift nach Anspruch 1,
**dadurch gekennzeichnet, dass** die erste (84) und die zweite Anlagefläche (86) auf entgegengesetzten Seiten der Stiftachse (S) ausgebildet sind.

3. Umsetzeinrichtung mit Fangstift nach Anspruch 1 oder 2,
**dadurch gekennzeichnet, dass** die erste (84) und die zweite Anlagefläche (86) in axialer Richtung oder/und in Umfangsrichtung mit Abstand voneinander ausgebildet sind.

4. Umsetzeinrichtung mit Fangstift nach einem der vorhergehenden Ansprüche,
**dadurch gekennzeichnet, dass** zumindest zwischen dem einführseitigen Axialende (84a, 86a) der ersten (84) oder/und der zweiten Anlagefläche (86) und dem Fangstiftkörper (78) eine in Einführrichtung (ER) verlaufende Einführrampe (80a, 82a) vorgesehen ist.

5. Umsetzeinrichtung mit Fangstift nach einem der vorhergehenden Ansprüche,
**dadurch gekennzeichnet, dass** der Fangstift (68) an seinem einführseitigen Längsende (68a) mit einer Einführschräge (88), insbesondere einem Einführkonusabschnitt, ausgebildet ist.

6. Umsetzeinrichtung mit Fangstift nach den Ansprüchen 4 und 5,
**dadurch gekennzeichnet, dass** die Einführschräge (88) des Fangstifts (68) und die Einführrampe (80a) der dem einführseitigen Längsende (68a) des Fangstifts (68) näher liegenden Anlagefläche (84) zumindest abschnittsweise als eine in Einführrichtung (ER) stufenlos zusammenhängende Fläche ausgebildet sind.

7. Umsetzeinrichtung mit Fangstift nach einem der vorhergehenden Ansprüche,
**dadurch gekennzeichnet, dass** zwischen der dem einführseitigen Längsende (68a) des Fangstifts (68) näher liegenden Anlagefläche (84) und dem Fangstift (68), vorzugsweise zwischen beiden Anlageflächen (84, 86) und dem Fangstift (68), eine in Ausziehrichtung (AR) verlaufende Ausziehrampe (80d) ausgebildet ist.

8. Umsetzeinrichtung mit Fangstift nach einem der vorhergehenden Ansprüche,
**dadurch gekennzeichnet, dass** zwischen wenigstens einem umfangende, vorzugsweise beiden Umfangsenden, der ersten (84) oder/und der zweiten Anlagefläche (86) und dem Fangstiftkörper (78) eine in Umfangsrichtung verlaufende Rampe (80b, 80c, 82b, 82c) vorgesehen ist.

9. Umsetzeinrichtung mit Fangstift nach einem der vorhergehenden Ansprüche,
**dadurch gekennzeichnet, dass** der Fangstift (68) an seinem dem einführseitigen Längsende (68a) axial entgegengesetzten Längsende (68b) eine Einsteckgeometrie (94) zum Einstecken in eine Einsteckgegengeometrie einer Fangstiftaufnahme der Umsetzeinrichtung (44,46) aufweist, wobei sich die Einsteckgeometrie (94) vorzugsweise langs einer Einsteckachse (G) erstreckt.

10. Umsetzeinrichtung mit Fangstift nach Anspruch 9,
**dadurch gekennzeichnet, dass** die Einsteckachse (G) zur Fangstiftachse (S) parallel ist, wobei sie vorzugsweise zu einem anlageflächenfreien Umfangsbereich des Fangstifts (68) hin versetzt ist.

11. Umsetzeinrichtung mit Fangstift nach Anspruch 9 oder 10,
**dadurch gekennzeichnet, dass** die Einsteckgeometrie (94) an ihrem einsteckseitigen Längsende mit einer Einfühmeigung (94a), vorzugsweise in Form eines Konusabschnittes, ausgebildet ist

12. Umsetzeinrichtung mit Fangstift nach einem der vorhergehenden Ansprüche,
**dadurch gekennzeichnet, dass** sie eine Mehrzahl von Fangstiften (68) umfasst, wobei vorzugsweise wenigstens zwei Fangstifte (68) zu einer gemeinsam verstellbaren Fangstiftanordnung zusammengefasst sind.

## Claims

1. Transfer device which is designed for transferring a work carrier (56) from a first work carrier position into a second work carrier position different from the first, comprising at least one catch pin (68) which extends along a pin axis (S) and which is adjustable between a non-engagement position, in which it is disengaged from a work carrier (56), and an engagement position, in which it is in engagement with a work carrier (56), **characterized in that** the catch pin (68) comprises a catch pin body (78) on which a first (80) and a second radial projection (82) are formed, wherein the first projection (80) has a first bearing surface (84) and the second projection (82) has a second bearing surface (86) which are designed for bearing against mating bearing surfaces (70a) of an essentially cylindrical engagement aperture (70) of a work carrier (56), wherein the first (84) and the second bearing surface (86) are formed, at least in sections, in different axial regions and different circumferential regions of the catch pin (78).

2. Transfer device with catch pin according to Claim 1, **characterized in that** the first (84) and the second bearing surface (86) are formed on opposite sides of the pin axis (S).

3. Transfer device with catch pin according to Claim 1 or 2, **characterized in that** the first (84) and the second bearing surface (86) are formed at a distance from one another in the axial direction or/and in the circumferential direction.

4. Transfer device with catch pin according to one of the preceding claims, **characterized in that** an insertion ramp (80a, 82a) running in the insertion direction (ER) is provided at least between the insertion-side axial end (84a, 86a) of the first (84) or/and of the second bearing surface (86) and the catch pin body (78).

5. Transfer device with catch pin according to one of the preceding claims, **characterized in that** the catch pin (68) is formed at its insertion-side longitudinal end (68a) with an insertion bevel (88), in particular a conical insertion section.

6. Transfer device according to Claims 4 and 5, **characterized in that** the insertion bevel (88) of the catch pin (68) and the insertion ramp (80a) of the bearing surface (84) closer to the insertion-side longitudinal end (68a) of the catch pin (68) are formed, at least in sections, as a stepless continuous surface in the insertion direction (ER).

7. Transfer device with catch pin according to one of the preceding claims, **characterized in that** a withdrawal ramp (80d) running in the withdrawal direction (AR) is formed between the bearing surface (84) closer to the insertion-side longitudinal end (68a) of the catch pin (68) and the catch pin (68), preferably between both bearing surfaces (84, 86) and the catch pin (68).

8. Transfer device with catch pin according to one of the preceding claims, **characterized in that** a ramp (80b, 80c, 82b, 82c) running in the circumferential direction is provided between at least one circumferential end, preferably between both circumferential ends, of the first (84) or/and of the second bearing surface (86) and the catch pin body (78).

9. Transfer device with catch pin according to one of the preceding claims, **characterized in that** the catch pin (68), at its longitudinal end (68b) axially opposite the insertion-side longitudinal end (68a), has a push-in geometry (94) for pushing into a mating push-in geometry of a catch pin receptacle of the transfer device (44, 46), the push-in geometry (94) preferably extending along a push-in axis (G).

10. Transfer device with catch pin according to Claim 9, **characterized in that** the push-in axis (G) is parallel to the catch pin axis (S), wherein it is preferably offset towards a circumferential region of the catch pin (68) free of bearing surfaces.

11. Transfer device with catch pin according to Claim 9 or 10, **characterized in that** the push-in geometry (94), at its longitudinal end on the push-in side, is formed with an insertion slope (94a), preferably in the form of a conical section.

12. Transfer device with catch pin according to one of the preceding claims, **characterized in that** it comprises a plurality of catch pins (68), wherein preferably at least two catch pins (68) are combined to form a jointly adjustable catch pin arrangement.

## Revendications

1. Dispositif de transfert, qui est réalisé pour transférer un porte-pièce (56) d'une première position de porte-pièce à une seconde position de porte-pièce différente de la première, comprenant au moins un pilote conique (68) qui s'étend le long d'un axe de pilote (S) et peut être déplacé entre une position de non-engagement, dans laquelle il n'est pas engagé dans un porte-pièce (56), et une position d'engagement, dans laquelle il est engagé dans un porte-pièce (56),
**caractérisé en ce que**
le pilote conique (68) présente un corps (78), sur lequel sont réalisées une première (80) et une deuxième (82) saillies radiales, la première saillie (80) présentant une première surface de contact (84) et la deuxième saillie (82) présentant une deuxième surface de contact (86) qui sont réalisées de manière à venir en contact avec des surfaces de contact antagonistes (70a) d'un évidement d'engagement (70) essentiellement cylindrique d'un porte-pièce (56), la première (84) et la deuxième (86) surfaces de contact étant réalisées au moins partiellement dans des zones axiales et des zones périphériques différentes du pilote conique (68).

2. Dispositif de transfert comprenant un pilote conique selon la revendication 1,
**caractérisé en ce que** la première (84) et la deuxième (86) surfaces de contact sont réalisées sur des côtés opposés de l'axe de pilote (S).

3. Dispositif de transfert comprenant un pilote conique selon la revendication 1 ou 2,
**caractérisé en ce que** la première (84) et la deuxième (86) surfaces de contact sont réalisées à distance l'une de l'autre dans la direction axiale et/ou dans la direction périphérique.

4. Dispositif de transfert comprenant un pilote conique selon l'une quelconque des revendications précédentes,
**caractérisé en ce qu'**au moins entre l'extrémité axiale du côté de l'entrée (84a, 86a) de la première (84) et/ou de la deuxième (86) surfaces de contact et le corps du pilote conique (78), est prévue une rampe d'insertion (80a, 82a) s'étendant dans la direction d'insertion (ER).

5. Dispositif de transfert comprenant un pilote conique selon l'une quelconque des revendications précédentes,
**caractérisé en ce que** le pilote conique (68) est réalisé à son extrémité longitudinale du côté de l'insertion (68a) avec un biseau d'insertion (88), notamment une portion conique d'insertion.

6. Dispositif de transfert comprenant un pilote conique selon l'une quelconque des revendications 4 et 5,
**caractérisé en ce que** le biseau d'insertion (88) du pilote conique (68) et la rampe d'insertion (80a) de la surface de contact (84) située plus près de l'extrémité longitudinale (68a) du pilote conique (68) du côté de l'insertion sont réalisés au moins en partie sous forme de surface continue sans gradins dans la direction d'insertion (ER).

7. Dispositif de transfert comprenant un pilote conique selon l'une quelconque des revendications précédentes,
**caractérisé en ce qu'**entre la surface de contact (84) située plus près de l'extrémité longitudinale (68a) du pilote conique (68) du côté de l'insertion et le pilote conique (68), de préférence entre les deux surfaces de contact (84, 86) et le pilote conique (68), est réalisée une rampe de sortie (80d) s'étendant dans la direction de sortie (AR).

8. Dispositif de transfert comprenant un pilote conique selon l'une quelconque des revendications précédentes,
**caractérisé en ce qu'**entre au moins une extrémité périphérique, de préférence les deux extrémités périphériques, de la première (84) et/ou de la deuxième (86) surfaces de contact et le corps du pilote conique (78), est prévue une rampe (80b, 80c, 82b, 82c) s'étendant dans la direction périphérique.

9. Dispositif de transfert comprenant un pilote conique selon l'une quelconque des revendications précédentes,
**caractérisé en ce que** le pilote conique (68) présente, à son extrémité longitudinale (68b) opposée axialement à l'extrémité longitudinale (68a) du côté de l'insertion, une géométrie d'insertion (94) pour l'insertion dans une géométrie d'insertion opposée d'un logement de pilote conique du dispositif de transfert (44, 46), la géométrie d'insertion (94) s'étendant de préférence le long d'un axe d'insertion (G).

10. Dispositif de transfert comprenant un pilote conique selon la revendication 9,
**caractérisé en ce que** l'axe d'insertion (G) est parallèle à l'axe du pilote conique (S), et est de préférence décalé par rapport à une région périphérique du pilote conique (68) exempte de surface de contact.

11. Dispositif de transfert comprenant un pilote conique selon la revendication 9 ou 10,
**caractérisé en ce que** la géométrie d'insertion (94) est réalisée à son extrémité longitudinale du côté de l'insertion, avec une pente d'insertion (94a), de préférence sous forme d'une portion de cône.

12. Dispositif de transfert comprenant un pilote conique selon l'une quelconque des revendications précédentes,
**caractérisé en ce qu'**il comprend une pluralité de pilotes coniques (68), de préférence au moins deux pilotes coniques (68), étant réunis pour former un agencement de pilotes coniques réglable en commun.
